# EUROPÄISCHE PATENTANMELDUNG

(11) **EP 2 584 872 A1**
(43) Veröffentlichungstag der Anmeldung: **24.04.2013**
(21) Anmeldenummer: 12169812.0
(22) Anmeldetag: 24.08.2008
(51) Int. Cl.: H05B 37/02

(54) **Schaltmodule zur Verwendung als Einbruchschutz**

(30) Priorität: 27.08.2007 DE 102007041180; 27.08.2007 DE 202007012141 U
(62) Teilanmeldung aus: 08803173.7
(71) Anmelder: Jensen, John Børsting, 7600 Struer (DK); Linke, Alfred, 10779 Berlin (DE)
(72) Erfinder: Jensen, John Børsting, 7600 Struer (DK); Linke, Alfred, 10779 Berlin (DE)
(74) Vertreter: Carlsen, Bjarne

(57) **Zusammenfassung**

Die Erfindung betrifft elektronische Schaltmodule, die insbesondere zum vorbeugenden Einbruchschutz Verwendung finden und mit denen die fest in den Räumen installierten Leuchten und Wandschalter zur Simulation von Anwesenheit - auch als nachrüstbare Schaltmodule in vorhandene Elektorinstallationen - benutzt werden. Die Anwesenheit von Bewohnern wird mit Hilfe automatischen Ein- und Ausschaltens von Licht bei Abwesenheit simuliert, wobei die Programmierung der Schaltzyklen automatisch während der Nutzung erfolgt.

## Beschreibung

Die Erfindung betrifft elektronische Schaltmodule, die insbesondere zum vorbeugenden Einbruchschutz Verwendung finden und mit denen die fest in den Räumen installierten Leuchten und Schalter zur Simulation von Anwesenheit - auch als nachrüstbare Schaltmodule in vorhandene Elektorinstallationen - benutzt werden.

Als vorbeugenden Einbruchschutz empfehlen die Ratgeber der Polizei, bei Abwesenheit Licht im Haus entsprechend dem normalen Tages- oder Wochenrhythmus ein- und auszuschalten, um Anwesenheit realistisch vorzutäuschen. Das heißt, dass möglichst alle Räume mit nach außen zeigenden Fenstern, z.B. Bad, Diele und Küche, mit einbezogen sein sollten. Die Empfehlung gilt nicht nur für die Urlaubszeit; auch bei kurzzeitiger Abwesenheit, z.B. bei einem Theaterbesuch, sollte Anwesenheit simuliert sein (www.einbruchschutz.polizei-beratung.de).

Allgemein üblich ist, dass man in den zu beleuchtenden Räumen eine Tisch- oder Standleuchte mittels einer Steckdosenschaltuhr ein- und ausschaltet. Diese Schaltuhren verfügen in der Regel über ein Wochenprogramm mit mehreren Einschaltzyklen pro Wochentag (DE 09320245 U1 / DE 09312338 U1).

In den Patent- und Gebrauchsmusterschriften DE 29614337 U1 und DE 19641266 A1 werden kombinierte universale Einbruchschutzsicherungen beschrieben, die darauf beruhen, dass um das Wohngebäude verdeckte Tastschalter bei Betreten das Licht und eine Minisirene einschalten oder Einbruchsicherungen mit Selbstauslösung für eine helle Beleuchtung sorgen und mit einem Notruf zur Polizei reagieren.

Die Nachteile dieser Lösungen bestehen darin, dass:
a. die Schaltuhren für die in den zu beleuchtenden Räumen installierten Deckenleuchten nicht einsetzbar sind
b. die Schaltuhren raumabhängig unterschiedlich zu programmieren sind
c. die Schaltzyklen der Jahreszeit anzupassen sind
d. mobile Leuchten aufzustellen sind, die in Bad, Küche und Diele kaum vorhanden sind
e. die Programmierung und Bedienung der Schaltuhren ein nicht geringes technisches Verständnis erfordert, weshalb es empfehlenswert ist, die Programmierung 1 bis 2 Tage vor Abwesenheit zu testen.

Wegen des erheblichen Aufwands wird es bei kurzzeitiger Abwesenheit daher oft unterlassen.

Alternative Lösungen zur Nutzung der fest installierten Leuchten bieten:

Komfortable Systeme zur Gebäudeautomation, bei denen in der zentralen Steuerung Zeitschaltuhren installiert sind, z.B. (Abkürzungsverzeichnis hinter den Beispielen):
EIB (europäischer Installationsbus)
LCN (Local Control Network) oder

Wandschalter mit programmierbarer Schaltuhr, z.B. Komfort-Timer-Bedienelement (www.busch-jaeger.de).

Nachteile dieser Lösungen sind, neben den Kosten, dass
a. sie wegen des umfangreichen Installationsaufwands in der Regel nur bei einem Neubau oder einer umfangreichen Sanierung einsetzt werden
b. die zuvor aufgeführten Nachteile b, c und e nicht behoben sind.

Der Erfindung liegt die Aufgabe zugrunde, die Nachteile der bekannten Lösungen zu beseitigen und neue Möglichkeiten zu einem verbesserten Einbruchschutz zur Verfügung zu stellen.

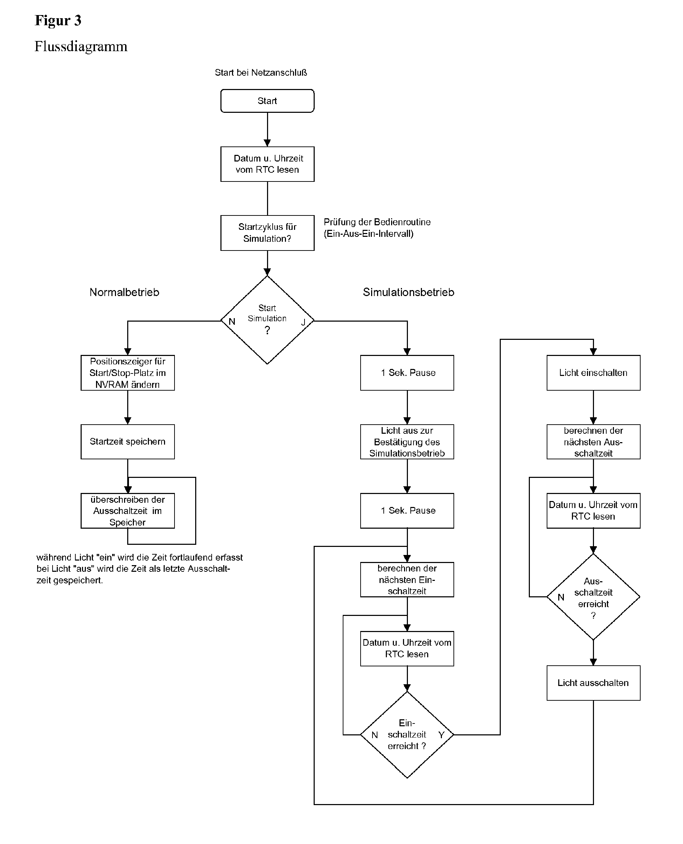

Die Aufgabe wurde durch die Verwendung von elektronischen Schaltmodulen für den vorbeugenden Einbruchschutz eines Objekts gelöst, die eine Anwesenheit von Bewohnern mit Hilfe automatischen Ein- und Ausschaltens von Licht bei Abwesenheit simulieren und wobei die Programmierung der Schaltzyklen automatisch während der Nutzung erfolgt. Die erfindungsgemäßen Schaltmodule verfügen über eine Steuerungseinheit zur Simulation der Anwesenheit von Personen in dem betreffenden Objekt. Sie werden zwischen Spannung führenden Elementen der Elektroinstallation des Objekts und mindestens einem elektrischen Gerät oder Verbraucher eingefügt und umfassen eine Einheit zur Erfassung und Speicherung der Ein- und Ausschaltzeiten elektrisch betriebener Geräte mit Hilfe eines Echtzeitgebers nach Uhrzeit, Wochentag und Kalenderwoche und eine Steuerungseinheit, die bei Abwesenheit die Einschaltzeit der Geräte entsprechend der gespeicherten Daten nach Uhrzeit und Wochentag in dem Schaltmodul wiederholt (Flussdiagramm nach Figur 3).

Die Schaltmodule verfügen neben der Steuerungseinheit über Mittel zur Speicherung von Ein- und Ausschaltvorgängen des mindestens einen elektrischen Geräts oder Verbrauchers in einem bei Anwesenheit von Personen in dem Objekt an dem Schaltmodul eingestellten Normalbetrieb und über Mittel zur Wiederholung der gespeicherten Ein- und Ausschaltvorgänge an dem Gerät oder Verbraucher in einem in Abwesenheit von Personen an dem Schaltmodul eingestellten Simulationsbetrieb. Dabei wird die Speicherung der Ein- und Ausschaltvorgänge im Normalbetrieb sowie deren Wiederholung im Simulationsbetrieb durch die Steuerungseinheit des Schaltmoduls gesteuert.

Die erfindungsgemäßen Schaltmodule sind grundsätzlich nachrüstbar und lassen sich in vorhandene Elektorinstallationen einfügen. Mittels einer festgelegten Betätigungsabfolge an einem externen Schalter erfolgt durch Ein- und Ausschalten der Energie am Verbraucher die Aktivierung des Simulationsbetriebes und das Erkennen der Betätigungsabfolge (nach dem Schema: zunächst Aktivierung und dann Bestätigung der Aktivierung des Simulationsbetriebs). Der Start des Simulationsbetriebes wird durch eine Reaktion des Schaltmoduls bestätigt.

Unter Betätigungsabfolge ist zu verstehen: Zur Bestätigung der Aktivierung des Simulationsbetriebes wird das Licht ein- und nach einer Sekunde wieder ausgeschaltet (am Wandschalter z.B.: Licht einschalten, 1 Sekunde Pause, Licht ausschalten, 1 Sekunde Pause, Schalter wieder einschalten, Ende). Danach erfolgt der Simulationsbetrieb entsprechend den gespeicherten Einschaltzeiten.

Bei den genannten Mitteln zur Speicherung der Ein- und Ausschaltvorgänge handelt es sich um einen Speicher des Mikrocontrollers und /oder um einen peripheren Speicher des Mikrocontrollers, bei den Mitteln zur Wiederholung der gespeicherten Ein- und Ausschaltvorgänge um mindestens ein von der Steuerungseinheit entsprechend den im Normalbetrieb in den Mitteln zur Speicherung gespeicherten Ein- und Ausschaltvorgängen angesteuertes Relais oder einen entsprechend angesteuerten Halbleiterschalter.

In den Schaltmodulen ist ein Zeitgeber oder ein Lichtsensor angeordnet, so dass die Ein- und Ausschaltvorgänge in den Mitteln zur Speicherung in Zuordnung zu den Zeitpunkten ihres Auftretens nach Uhrzeit, Wochentag und Kalenderwoche oder in Zuordnung zu der von dem Lichtsensor in dem Objekt bei deren Auftreten jeweils ermittelten Umgebungshelligkeit gespeichert und wiederholt werden.

Die erfindungsgemäßen Schaltmodule enthalten eine Einheit zur Speicherung der Muster der Ein- und Ausschaltzeiten elektrisch betriebener Geräte mittels eines Wandschalters oder anderer externer Schalter und eine Steuerungseinheit, die bei Abwesenheit die simulierten Ein- und Ausschaltzeiten der Geräte entsprechend der gespeicherten Muster berechnen sowie einen Schalter parallel oder seriell mit den Schaltern anderer Lichtsteuerungssysteme.

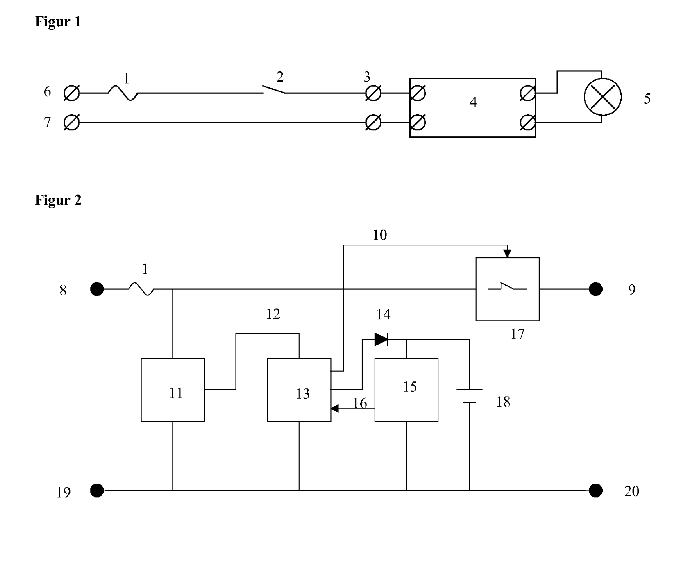

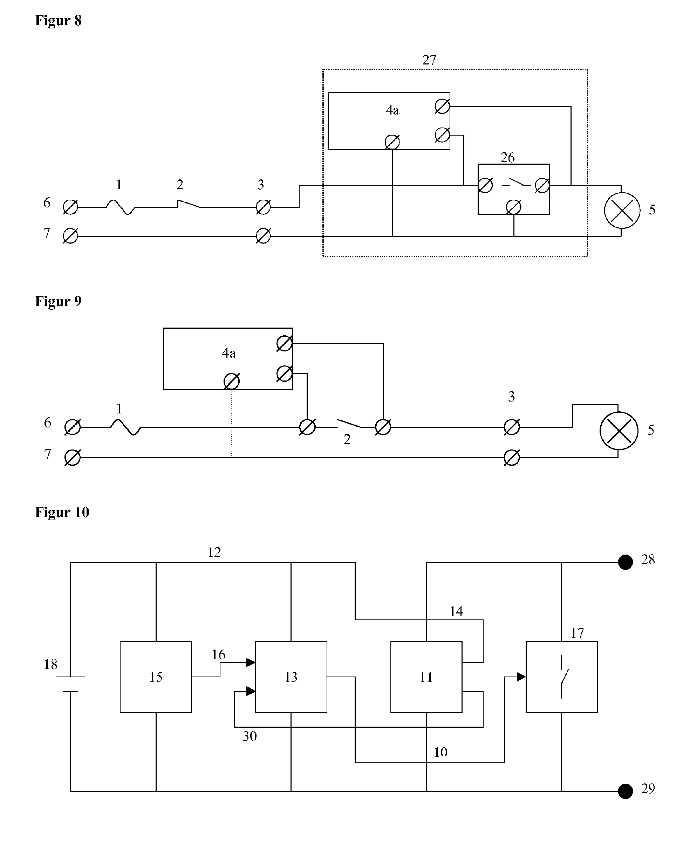

Die Speichereinheit der erfindungsgemäßen nachrüstbaren Schaltmodule besteht mindestens aus den Komponenten Netzteil (11), Mikrocontroller (13) und Relais oder Halbleiter 17 (Fig. 2 oder Fig. 10).

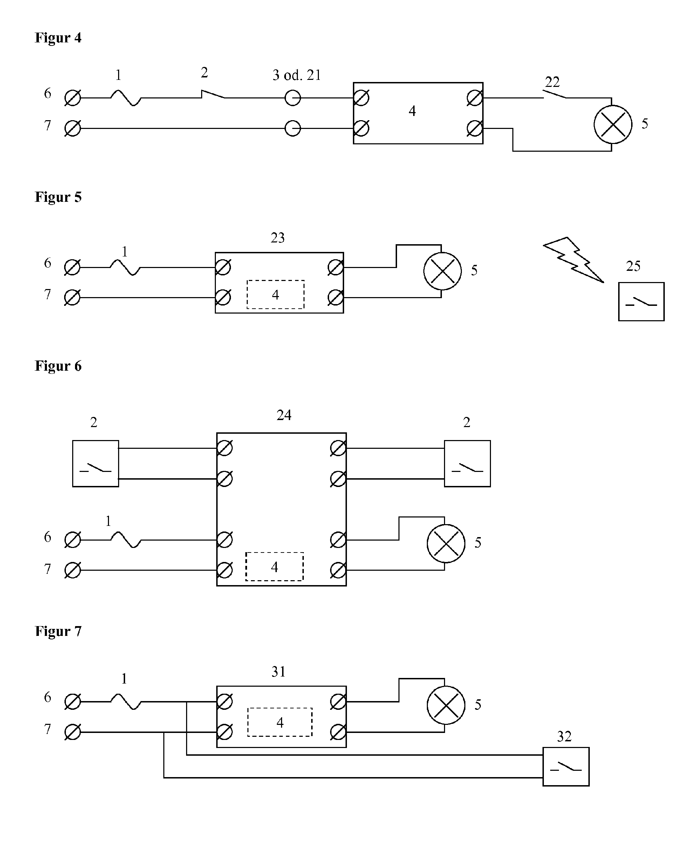

Die Montage der Schaltmodule erfolgt durch:
a. Platzierung:
   - zwischen Wandschalter und Leuchte (Fig. 1), mit Öffner als Schaltkontakt (Fig. 2)
   - parallel zum Wandschalter (Fig. 9), mit Schließer als Schaltkontakt (Fig. 10, Variante 4a)
b. Anschluss:
   nach einem der nachstehenden Beispiele:
      - zwischen Schalter und Leuchte mit einem Öffner-Kontakt in einem der Leiter (Fig. 1 und 2)
      - parallel zum Leuchtenschalter (Fig. 9 und 10)
      - vor dem Leuchtenschalter in Reihe mit einem Öffner-Kontakt in einem der Leiter (Fig. 4), wobei die Erfassung der Einschaltzeiten mittels eines Stromsensors erfolgt
      - parallel oder seriell mit den Schaltern anderer Lichtsteuerungssysteme (Fig. 8).

Die automatische Lernfunktion der Schaltmodule für die Simulation von Anwesenheit ist auch in anderen Systemen einsetzbar, so in Bewegungsmeldern, Dämmerungsschaltern, Dimmern, Funkschaltern oder anderen automatischen Lichtsteuerungen (Fig. 5, 6 und 7).

Die erfindungsgemäßen Schaltmodule werden in den Betriebsarten "Normalbetrieb" oder "Simulationsbetrieb" betrieben, wobei
- im Normalbetrieb die realen Ein- und Ausschaltzeiten des Benutzers nach Uhrzeit, Wochentag und Kalenderwoche erfasst und gespeichert werden
- im Simulationsbetrieb das Ein- und Ausschalten bei Abwesenheit automatisch, basierend auf den im Normalbetrieb erfassten Ein- und Ausschaltzeiten, erfolgt.

Zur Erfassung der Tageszeit wird als Zeitgeber ein RTC-Baustein eingesetzt, als Schaltelement ein Relais (mono- oder bistabil) oder ein elektronischer Schalter und für die Energieversorgung eine Batterie oder ein Kondensator.

Die erfindungsgemäßen Schaltmodule sind - darin liegt ihr Vorteil - dadurch ausgezeichnet, dass
- sich zur Erfassung der Ein- und Ausschaltzeiten im Normalbetrieb sowie zur Aktivierung und Deaktivierung des Simulationsbetriebes die bereits vorhandenen Schalter und Leuchten nutzen lassen
- die Erfassung und Speicherung während der vorausgegangenen Nutzung erfolgt
- weiterhin die bereits installierten Unterputzschalter und Deckenleuchten benutzt werden
- zum Nachrüsten keine Änderungen in den installierten Elektroleitungen erforderlich sind
- sie in den Abmessungen so gestaltet sind, dass die Montage in der Installationsdose des Unterputzschalters, in der Verteilerdose, im Leuchtenanschluss, anstelle der Lüsterklemme, oder in der Leuchte erfolgt
- nach der Montage ihre Funktion, Anwesenheit zu simulieren, sichtbar nicht zu erkennen ist
- sie in einer Variante, mit Öffner als Schaltkontakt, auch bei installierten Wechsel- oder Serienschaltern einsetzbar sind.

Es hat sich überraschenderweise herausgestellt, dass sich der Erfolg sowohl im Normalbetrieb, bei dem die realen Ein- und Ausschaltzeiten des Benutzers erfasst werden, als auch im Simulationsbetrieb - bei dem das Ein- und Ausschalten bei Abwesenheit automatisch, basierend auf die im Normalbetrieb erfassten Ein- und Ausschaltzeiten, erfolgt - erreichen lässt. Dazu kommt, dass die Schaltmodule in vorhandenen Installationen auf einfache Weise nachrüstbar sind.

Zu den wichtigsten Merkmalen der erfindungsgemäßen Schaltmodule gehört es, dass sie alle Funktionen zur Erfassung und Speicherung der Ein- und Ausschaltzeiten für den Simulationsbetrieb aus dem Normalbetrieb und für die Steuerung des Simulationsbetriebes enthalten. Die Schaltmodule arbeiten autark. Sie benötigen keine Kommunikation mit anderen Schalteinheiten.

Vor allem aber: Sie sind nachrüstbar in vorhandenen Elektorinstallationen mittels eines Schraubendrehers. Es ist kein Austausch der bereits installierten Schalter und Leuchten erforderlich. Die Aktivierung und Deaktivierung des Simulationsbetriebes erfolgt mittels der bereits installierten Schalter. Die Schaltmodule können einfach in vorhandene Installationen eingefügt werden. Änderungen an der vorhandenen Elektroinstallation an Wand oder Zimmerdecken sind nicht erfoderlich. Ein weiterer Vorteil besteht darin, dass sie sehr kleine Abmessungen im Vergleich zu anderen Lösungen aufweisen.

Die Bestätigung der Aktivierung des Simulationsbetriebes geschieht durch selbsttätiges Ausschalten der Leuchte bei Schalterstellung "Ein" bzw. kurzzeitiges Ausschalten und anschließendes Einschalten, wenn die Aktivierung innerhalb der Einschaltzeit für den Simulationsbetrieb erfolgt.

Die erfindungsgemäßen Schaltmodule, deren Schaltzyklen während der Nutzung programmiert werden, gehen aus den Betriebsarten Normalbetrieb und /oder Simulationsbetrieb hervor: Im Normalbetrieb werden die realen Ein- und Ausschaltzeiten erfasst, im Simulationsbetrieb erfolgt das Ein- und Ausschalten bei Abwesenheit automatisch, aufgrund der im Normalbetrieb erfassten Ein- und Ausschaltzeiten.

Die Erfindung beruht also auf elektronischen Schaltmodulen, mit denen die fest in den Räumen installierten Leuchten und Wandschalter zur Simulation von Anwesenheit benutzt werden. Die Schaltmodule sind in den Abmessungen und Funktionen so gestaltet, dass sie
- in der Leuchte oder im Leuchtenanschluss anstelle der Lüsterklemme oder
- in einer alternativen Version hinter dem Wandschalter montiert werden können oder
- als Funktion in andere Lichtsteuerungssysteme, z.B. in Bewegungsmelder, Dimmer, Dämmerungsschalter, Funkschalter, Außenleuchten, Energiesparlampen oder automatische Lichtsteuerungen integriert werden können.

In einer vereinfachen Version sind die Schaltzeiten für den Simulationsbetrieb bereits raumabhängig vorprogrammiert, z. B. morgens von 6 - 9 Uhr, abends von 17- 23 Uhr. Diese Zeiten können zusätzlich mittels Zufallsgenerator in einem Bereich von +/-30 Minuten variiert werden.

In einer weiteren Variante ist anstelle des Zeitgebers ein Lichtsensor eingesetzt, wobei aus der Einschaltdauer des Lichtsensors die Uhrzeit annähernd ermittelt wird und somit die Anpassung der Ausschaltzeit morgens und der Einschaltzeit abends an die fortschreitende Jahreszeit erfolgt.

Aus der Einschaltdauer des Lichtsensors sowie aus dem Statuswechsel am Lichtsensor und durch softwaregesteuerte mathematische Verfahren lässt sich die Uhr- und Jahreszeit annähernd ermitteln.
Beispiel: Bei einer Einschaltdauer von 14 Stunden beträgt die Einschaltzeit etwa 5.00 Uhr und die Ausschaltzeit etwa 19.00 Uhr. - die Uhr- und Jahreszeit aus dem Statuswechsel am Lichtsensor und durch softwaregesteuerte mathematische Verfahren annähernd ermittelt werden

Die Funktionsweise wird anhand der Figuren 1 bis 10 deutlich:
Figur 1 zeigt den Netzanschluss von Schaltmodul, Leuchte und Lichtschalter
Figur 2 zeigt das Blockschaltbild des Schaltmoduls
Figur 3 zeigt beispielhaft ein Flussdiagramm im Mikrocontroller
Figuren 4 bis 9 zeigen alternative Anschlusspläne
Figur 10 zeigt das Blockschaltbild eines alternativen Schaltmoduls (4a).

Das Programmieren der Schaltzeiten für den Simulationsbetrieb geschieht auf folgende Weise:

### a. Während des Normalbetriebs -

Die Ein- und Ausschaltzeiten werden kontinuierlich erfasst und für eine vorgegebene Anzahl von Tagen, Wochen oder Monaten gespeichert. Das Schaltmodul muss daher vor der ersten Nutzung des Simulations-Betriebes für mindestes eine Woche Daten erfasst haben, um die Einschaltzeiten im Simulationsbetrieb möglichst realistisch zu wiederholen.

### b. Während der Produktion -

Im Schaltmodul wird bereits ein anpassungsfähiges Simulationsmodell mit üblichen Ein- und Ausschaltzeiten nach Wochentag und Jahreszeit installiert und mit Datum und Uhrzeit mittels einer Batterie gespeichert, das sofort für den Simulationsbetrieb einsetzbar ist.

In beiden Varianten werden die Schaltzeiten während des Normalbetriebs ständig weiter erfasst, so dass sie für jeden Wochentag und Raum den realen Schaltzeiten entsprechen. Im Simulationsbetrieb werden die Schaltzeiten der letzten Wochen als Muster für die neue Woche übernommen und somit automatisch der fortschreitenden Jahreszeit angepasst.

Die Ein- und Ausschaltzeiten können zusätzlich mittels eines Zufallsgenerators geringfügig geändert werden. Bei längerer Abwesenheit, z.B. einige Monate, können die Ein- und Ausschaltzeiten automatisch den Auf- und Untergangszeiten der Sonne angepasst werden.

Die Erfassung der Schaltzeiten erfolgt je nach Ausführung durch Messung der Spannung am Eingang des Schaltmoduls (Eingang 1 und 2) oder durch Messung des Stromes mit Hilfe eines Stromsensors. Der Simulationsbetrieb wird bei Verlassen des Hauses mittels einer einfachen Betätigungs-Routine am Schalter aktiviert, z.B. durch kurzzeitiges Ein-, Aus- und Einschalten der Leuchte innerhalb von 3 Sekunden.

Zur Bestätigung der Aktivierung schaltet das Schaltmodul die Leuchte nach 1 Sekunde aus und startet den Simulationsbetrieb entsprechend den gespeicherten Schaltzyklen. Nach der Rückkehr beendet ein erneutes Betätigen des Schalters (Ausschalten) den Simulationsbetrieb.

Gesteuert wird das Schaltmodul vorzugsweise durch einen Mikrocontroller in Verbindung mit einem Zeitgeber, z.B. einem RTC-Baustein (real time clock) zur Erfassung der Tageszeit und des Datums.

Im Normalbetrieb ist der Mikrocontroller nur bei eingeschaltetem Lichtschalter aktiv (Spannung an den Anschlüssen Eingang 1 und 2).

Die Versorgungsenergie für das Schaltmodul liefert bei ausgeschaltetem Lichtschalter eine aufladbare Batterie oder ein Kondensator, die bei eingeschaltem Licht wieder aufgeladen werden. Die gespeicherte Energie ist ausreichend, um den Zeitgeber des Schaltmoduls für mehrere Jahre zu versorgen.

Im Simulationsbetrieb ist der Mikrocontroller ständig aktiv, da kontinuierlich Netzspannung zur Versorgung vorhanden ist.

Als Schaltelement wird ein Relais oder ein Stromstoß-Relais eingesetzt, das nur beim Umschalten Energie benötigt. Alternativ kann auch ein elektronischer Schalter (TRIAC, MOSFET oder IGBT) mit ähnlicher Funktion benutzt werden.

Die Merkmale der Erfindung gehen aus den Elementen der Ansprüche und aus der Beschreibung hervor, wobei sowohl einzelne Merkmale als auch mehrere in Form von Kombinationen vorteilhafte Ausführungen darstellen, für die mit dieser Schrift Schutz beantragt wird. Das Wesen der Erfindung besteht in einer Kombination aus bekannten (Sicherungen, Schalter, Mikrocontroller, Relais) und neuen Elementen (Figuren 2 oder 10: Blockschaltbild; Figur 3: Flussdiagramm; Figur 8: Kombination von ATLAS-Modulen mit anderen Licht-steuerungssystemen, wie Bewegungsmelder, Dämmerungsschalter, Dimmer oder Funkschalter), die sich gegenseitig beeinflussen und in ihrer neuen Gesamtwirkung einen Gebrauchsvorteil und den erstrebten Erfolg ergeben, der darin liegt, dass nunmehr überraschend leicht zu bedienende und nachrüstbare Schaltmodule zur Verwendung als Einbruchschutz zur Verfügung gestellt werden.

Zum Wesen der Erfindung gehört weiter, dass die Erfassung und Speicherung der Ein- und Ausschaltzeiten automatisch während der Nutzung im Normalbetrieb erfolgt und dabei die fest installierten Leuchten und Wandschalter benutzt werden.

Die Montage (Platzierung und Anschluss) der erfindungsgemäßen Schaltmodule erfolgt auf unterschiedliche Weise:
a) Schaltmodul 4 (Figur 2) mit Öffner als Schaltkontakt, zwischen Wandschalter 2 und Leuchte 5 (Figur 1 und 4)
b) alternatives Schaltmodul 4a (Figur 10) mit Schließer als Schaltkontakt, bei Anschluss nach Figur 8 und 9.

Das Schaltmodul 4 ist auch bei installierten Wechsel- oder Serienschaltern einsetzbar.

Als Schaltelemente werden Relais (mono- oder bistabil) oder elektronische Schalter eingesetzt und für die Energieversorgung Batterien oder Kondensatoren.

Die erfindungsgemäßen Schaltmodule zeichnen sich des weiteren dadurch aus, dass ihre automatischen Lernfunktionen für die Simulation von Anwesenheit auch in anderen Systemen einsetzbar sind, z.B. in Bewegungsmeldern, Dimmern, Dämmerungsschaltern oder in anderen automatischen Lichtsteuerungen (Figur 5 bis 8).

In weiteren Varianten der nachrüstbaren Schaltmodule wird die erfindungsgemäße Erfassung der Ein- und Ausschaltzeit genutzt

- zur Speicherung einer maximal üblichen oder zulässigen Einschaltdauer von elektrisch betriebenen Geräten

- zur Energieeinsparung, z.B. Ausschalten von Licht in Nebenräumen (Keller, Speicher, Garage)

- zum Brandschutz, z.B. Ausschalten von Herd- oder Kochplatten, Fernseher, Kaffeemaschine usw. bei unterbliebener Abschaltung durch den Nutzer bei Einschlafen oder Vergessen sowie

- zur Erhöhung der persönlichen Sicherheit hinsichtlich der Funktionsweise elektrischer Geräte bei Abwesenheit (und zur Vermeidung der Frage nach Antritt der Urlaubsreise und nach 300 km Wegstrecke: "Hast Du das Licht im Keller ausgeschaltet?").

Bei einer vereinfachten Ausführung eines nachrüstbaren Schaltmoduls zur Simulation von Anwesenheit werden die Schaltzyklen in der Weise ermittelt, dass ein Zeitgeber im Schaltmodul den Simulationsbetrieb begrenzt und die Anpassung der Ausschaltzeit morgens bzw. der Einschaltzeit abends an die fortschreitende Jahreszeit mittels einer internen Kalenderfunktion oder eines zusätzlichen Lichtsensors erfolgt (Beispiel 11).

Die erfindungsgemäßen Schaltmodule finden des weiteren Verwendung zur Energieeinsparung, zum Brandschutz sowie zur Erhöhung der persönlichen Sicherheit hinsichtlich der Funktionsweise elektrischer Geräte bei Abwesenheit.

Die erfindungsgemäßen Schaltmodule stellen im Grunde speichernde Lüsterklemmen dar, die Ein- und Ausschaltvorgänge speichern und wiedergeben können ("intelligente Lüsterklemmen").

Die Erfindung soll anhand von Ausführungsbeispielen erläutert werden, ohne auf diese Beispiele beschränkt zu sein.

### Ausführungsbeispiele

### Beispiel 1 : Figur 1

Figur 1 zeigt den Netzanschluss von Schaltmodul, Leuchte und Lichtschalter.

Beispiel 2: Figur 2 zeigt das Blockschaltbild des Schaltmoduls [4].

Beispiel 3: Figur 3 zeigt beispielhaft ein Flussdiagramm im Mikrocontroller.

Beispiel 4: Figur 4 zeigt den Anschluss einer mobilen Steh- oder Tischleuchte an eine schaltbare Steckdose. Die Erfassung der Einschaltzeiten erfolgt durch Messen des Stromes mittels eines Stromsensors. Zur Erfassung der Einschaltzeiten und der Aktivierung des Simulationsbetriebs können beide Schalter benutzt werden.

Beispiel 5: Figur 5 zeigt die ATLAS-Funktion (ATLAS: Automatische Terminierung der Lichteinschaltzeiten zur Anwesenheits-Simulation), eingesetzt in Funkschalter, z.B. Fabrikat IHC-Wireless.

Beispiel 6: Figur 6 zeigt eine zentrale Steuerungseinheit mit mehreren Schaltern.

Beispiel 7: Figur 7 zeigt Steuerungen mit Power Line Communication (PLC) oder anderen Bussystemen. (PLC ist ein Standard, der zur Kommunikation das normale 230V-Netz nutzt).

Beispiel 8: Figur 8 zeigt ATLAS-Module, genutzt in Verbindung mit anderen Lichtsteuerungssystemen, z.B. mit Bewegungsmeldern - Dämmerungsschalter oder Dimmer.
Die Funktion des ATLAS-Moduls lässt sich auch in andere Systeme integrieren.

Beispiel 9: Figur 9 zeigt Anschluss parallel zum Wandschalter. Der Anschluss an N ist nicht erforderlich bei Einsatz einer aufladbaren Batterie.

Beispiel 10: Figur 10 zeigt das Blockschaltbild des alternativen Schaltmoduls 4a, das bei Anschluss nach Figur 9 einzusetzen ist.

### Beispiel 11: Vereinfachte Ausführung eines nachrüstbaren Schaltmoduls

Bei einer vereinfachten Ausführung eines nachrüstbaren Schaltmoduls zur Simulation von Anwesenheit werden die Schaltzyklen in nachfolgender Weise ermittelt:
Ein Zeitgeber im Schaltmodul begrenzt den Simulationsbetrieb, unterschiedlich nach Bad, Küche usw. entsprechend der normalen Nutzung, z. B. maximal von 6:00 - 23:00 Uhr, wobei morgens die Einschaltzeit und abends die Ausschaltzeit mittels eines Zufallsgenerators in einem Intervall von z.B. +/- 30 Minuten gesetzt wird.
Die Anpassung der Ausschaltzeit morgens bzw. der Einschaltzeit abends an die fortschreitende Jahreszeit erfolgt mittels einer internen Kalenderfunktion oder eines zusätzlichen Lichtsensors, ebenfalls variiert durch den Zufallsgenerator.
Anstelle eines Zeitgebers zur Erfassung der Uhr- und Jahreszeit kann diese annähernd auch aus der Einschaltdauer des Lichtsensors und durch softwaregesteuerte mathematische Verfahren ermittelt werden.
Zum Beispiel: Einschaltdauer 14 Stunden
Uhrzeit bei Aktivierung etwa 5.00 / bei Deaktivierung etwa 19.00 Uhr.

### Bezugszeichenliste

- 1: Sicherung
- 2: Wandschalter
- 3: Leuchten-Anschluss
- 4: Schaltmodul
- 4 a: Alternatives Schaltmodul
- 5: Leuchte
- 6: P / Phase (Stromnetz)
- 7: N / Neutralleiter (Stromnetz)
- 8: Eingang 1
- 9: Ausgang 1
- 10: Steuerausgang
- 11: Netzteil
- 12: 5 V DC
- 13: Microcontroller
- 14: Ladestrom < 0.1 mA
- 15: Zeitgeber
- 16: Uhrzeit
- 17: Relais oder Halbleiter
- 18: aufladbare Batterie oder Kondensator
- 19: Eingang 2
- 20: Ausgang 2
- 21: Steckdose (normal oder schaltbar)
- 22: Leuchtenschalter
- 23: Funkschalter
- 24: Kipprelais mit integrierter Anwesenheitssimulation
- 25: Funk-Wandschalter
- 26: Bewegungsmelder, Dämmerungsschalter, Dimmer
- 27: Kombination
- 28: Anschluss
- 29: Anschluss 2
- 30: Signal: Netz eingeschaltet
- 31: Alternatives Schaltmodul mit Buskommunikation (z.B. PLC)
- 32: Wandschalter mit Buskommunikation (z.B. PLC)

### Abkürzungsverzeichnis

- ATLAS: Automatische Terminierung der Lichteinschaltzeiten zur Anwesenheits-Simulation
- DC: direct current (Gleichstrom)
- EIB: Europäischer Installationsbus (nach EN 50090 genormtes Protokoll zur Datenübertragung zwischen Sensoren und Aktoren)
- IGBT: Insulated gate bipolar transistor / Bipolartransistor mit isolierter Gateelektrode
- LCN: Local Control Network
- MOSFET: Metal-Oxide-Semiconductor Field-Effect Transistor /Metall-Oxid-Halbleiter-/-Silizium-Feldeffekttransistor
- N: Neutralleiter
- NVRAM: Non Volatile Random Access Memory, (eine Speichertechnologie in der Elektronik, die ohne Aufrechterhaltung der Energieversorgung die Information halten kann)
- PLC: Power Line Communication (Standard zur Datenübertragung über das Stromnetz)
- RTC: Real Time Clock / Absolutzeitgeber
- TRIAC: TRI(ode) Alternating Current switch / Zweirichtungs-Thyristortriode
- 5 V DC: 5 Volt Gleichstrom

## Patentansprüche

1. Schaltmodule, insbesondere eingesetzt zum vorbeugenden Einbruchschutz eines Objekts, welche über eine Steuerungseinheit zur Simulation der Anwesenheit von Personen in dem betreffenden Objekt verfügen und zwischen Spannung führenden Elementen der Elektroinstallation des Objekts und mindestens einem elektrischen Gerät oder Verbraucher einzufügen sind, **dadurch gekennzeichnet, dass** die Schaltmodule neben der Steuerungseinheit über Mittel zur Speicherung von Ein- und Ausschaltvorgängen des mindestens einen elektrischen Geräts oder Verbrauchers in einem bei Anwesenheit von Personen in dem Objekt an dem Schaltmodul eingestellten Normalbetrieb und über Mittel zur Wiederholung der gespeicherten Ein- und Ausschaltvorgänge (Flussdiagramm nach Figur 3) an dem Gerät oder Verbraucher in einem in Abwesenheit von Personen an dem Schaltmodul eingestellten Simulationsbetrieb verfügen, wobei die Speicherung der Ein- und Ausschaltvorgänge im Normalbetrieb sowie deren Wiederholung im Simulationsbetrieb durch die Steuerungseinheit des Schaltmoduls gesteuert wird.

2. Schaltmodule nach Anspruch 1, die grundsätzlich nachrüstbar sind und sich in vorhandene Elektorinstallationen einfügen lassen, **dadurch gekennzeichnet, dass** mittels einer festgelegten Betätigungsabfolge an einem externen Schalter durch Ein- und Ausschalten der Energie am Verbraucher die Aktivierung des Simulationsbetriebes erfolgt und das Erkennen der Betätigungsabfolge sowie der Start des Simulationsbetriebes durch eine Reaktion des Schaltmoduls bestätigt wird.

3. Schaltmodule nach Anspruch 1 oder 2, **dadurch gekennzeichnet, dass** als Steuerungseinheit in dem Schaltmodul ein Mikrocontroller angeordnet ist und dass es sich bei den Mitteln zur Speicherung der Ein- und Ausschaltvorgänge um einen Speicher des Mikrocontrollers und /oder um einen peripheren Speicher des Mikrocontrollers handelt.

4. Schaltmodule nach einem der Ansprüche 1 bis 3, **dadurch gekennzeichnet, dass** es sich bei den Mitteln zur Wiederholung der gespeicherten Ein- und Ausschaltvorgänge um mindestens ein von der Steuerungseinheit entsprechend den im Normalbetrieb in den Mitteln zur Speicherung gespeicherten Ein- und Ausschaltvorgängen angesteuertes Relais oder einen entsprechend angesteuerten Halbleiterschalter handelt.

5. Schaltmodule nach einem der Ansprüche 1 bis 4, **dadurch gekennzeichnet, dass** in dem Schaltmodul ein Zeitgeber oder ein Lichtsensor angeordnet ist, so dass die Ein- und Ausschaltvorgänge in den Mitteln zur Speicherung in Zuordnung zu den Zeitpunkten ihres Auftretens nach Uhrzeit, Wochentag und Kalenderwoche oder in Zuordnung zu der von dem Lichtsensor in dem Objekt bei deren Auftreten jeweils ermittelten Umgebungshelligkeit gespeichert und wiederholt werden.

6. Schaltmodule nach einem der Ansprüche 1 bis 5, **dadurch gekennzeichnet, dass** sie in den Betriebsarten "Normalbetrieb" oder "Simulationsbetrieb" betrieben werden, wobei im
6.1. Normalbetrieb die realen Ein- und Ausschaltzeiten des Benutzers nach Uhrzeit, Wochentag und Kalenderwoche erfasst und gespeichert werden
6.2. Simulationsbetrieb das Ein- und Ausschalten bei Abwesenheit automatisch, basierend auf den im Normalbetrieb erfassten Ein- und Ausschaltzeiten, erfolgt.

7. Schaltmodule nach einem der Ansprüche 1 bis 6, **dadurch gekennzeichnet, dass** sie mindestens aus den Komponenten Netzteil (11), Mikrocontroller (13) und Relais oder Halbleiter (17) bestehen (Fig. 2 oder Fig. 10).

8. Schaltmodule nach einem der Ansprüche 1 bis 7, **dadurch gekennzeichnet, dass** die Platzierung
8.1. zwischen Wandschalter und Leuchte (Fig. 1), mit Öffner als Schaltkontakt (Fig. 2) oder
8.2. parallel zum Wandschalter (Fig. 9), mit Schließer als Schaltkontakt (Fig. 10, Variante 4a) erfolgt.

9. Schaltmodule nach einem der Ansprüche 1 bis 8, **dadurch gekennzeichnet, dass** der Anschluss
9.1. zwischen Schalter und Leuchte mit einem Öffner-Kontakt in einem der Leiter (Fig. 1 und 2) oder
9.2. parallel zum Leuchtenschalter (Fig. 9 und 10) oder
9.3. vor dem Leuchtenschalter in Reihe mit einem Öffner-Kontakt in einem der Leiter (Fig. 4), wobei die Erfassung der Einschaltzeiten mittels eines Stromsensors geschieht oder
9.4. parallel oder seriell mit den Schaltern anderer Lichtsteuerungssysteme (Fig. 8) erfolgt.

10. Schaltmodule nach einem der Ansprüche 1 bis 9, **dadurch gekennzeichnet, dass**
- zur Erfassung der Schaltzeiten ein Zeitgeber
- als Schaltelement ein Relais (mono- oder bistabil) oder ein elektronischer Schalter
- für die Energieversorgung eine Batterie oder ein Kondensator
eingesetzt ist.

11. Schaltmodule nach einem der Ansprüche 1 bis 10, **dadurch gekennzeichnet, dass** der Simulationsbetrieb mittels einer vorgegebenen Bedienroutine am Lichtschalter aktiviert wird - etwa durch "Ein-, Aus- und Einschalten innerhalb von 3 Sekunden" - und dass die Aktivierung des Simulationsbetriebs durch ein nachfolgendes Ausschalten der Leuchte bestätigt wird.

12. Schaltmodule nach einem der Ansprüche 1 bis 11, **dadurch gekennzeichnet, dass** zur Erfassung der Ein- und Ausschaltzeiten im Normalbetrieb und im Simulationsbetrieb sowie zur Aktivierung und Deaktivierung des Simulationsbetriebes die bereits installierten Schalter und Leuchten benutzt werden.

13. Schaltmodule nach einem der Ansprüche 1 bis 12, **dadurch gekennzeichnet, dass** die Ein- und Ausschaltzeiten des Simulationsbetriebs mittels eines Zufallsgenerators gesteuert werden.

14. Schaltmodule nach einem der Ansprüche 1 bis 13 in vereinfachter Ausführung, **dadurch gekennzeichnet, dass**
- im Zeitintervall von z.B. 23.00 - 6.00 Uhr und von 9.00 - 18.00 Uhr der Simulationsbetrieb mittels Zufallsgenerators deaktiviert ist
- anstelle eines Zeitgebers ein Lichtsensor eingesetzt ist.

15. Schaltmodule nach einem der Ansprüche 1 bis 14, **dadurch gekennzeichnet, dass**
- die Uhr- und Jahreszeit aus dem Statuswechsel am Lichtsensor und durch softwaregesteuerte mathematische Verfahren annähernd ermittelt werden
- die Dauer der ausreichende Beleuchtung durch Tageslicht etwa 14 Stunden und die Einschaltzeit etwa 5.00 Uhr und die Ausschaltzeit etwa 19.00 Uhr beträgt.

16. Schaltmodule nach einem der Ansprüche 1 bis 15, **dadurch gekennzeichnet, dass** sie in einer Variante, mit Öffner als Schaltkontakt, auch bei installierten Wechsel- oder Serienschaltern einsetzbar sind.

17. Schaltmodule nach einem der Ansprüche 1 bis 16, **dadurch gekennzeichnet, dass**
17.1. die Erfassung und Speicherung während der vorausgegangenen Nutzung erfolgt
17.2. weiterhin die bereits installierten Unterputzschalter und Deckenleuchten benutzt werden
17.3. zum Nachrüsten keine Änderungen in den installierten Elektroleitungen erforderlich sind
17.4. nach der Montage ihre Funktion, Anwesenheit zu simulieren, sichtbar nicht zu erkennen ist.

18. Schaltmodule nach einem der Ansprüche 1 bis 17, **dadurch gekennzeichnet, dass** sie in den Abmessungen so gestaltet sind, dass die Montage in der Installationsdose des Unterputzschalters, in der Verteilerdose, im Leuchtenanschluss, anstelle der Lüsterklemme, oder in der Leuchte erfolgt.

19. Schaltmodule nach einem der Ansprüche 1 bis 18, **dadurch gekennzeichnet, dass** sie zur Energieeinsparung, zum Brandschutz sowie zur Erhöhung der persönlichen Sicherheit hinsichtlich der Funktionsweise elektrischer Geräte bei Abwesenheit Verwendung finden.

20. Schaltmodule nach einem der Ansprüche 1 bis 19, **dadurch gekennzeichnet, dass** die automatische Lernfunktion für die Simulation von Anwesenheit auch in anderen Systemen einsetzbar ist, so in Bewegungsmeldern, Dimmern, Dämmerungsschaltern, Funkschaltern oder anderen automatischen Lichtsteuerungen (Fig. 5, 6 und 7).

21. Verwendung der Schaltmodule nach einem der Ansprüche 1 bis 20 zur Energieeinsparung, zum Brandschutz sowie zur Erhöhung der persönlichen Sicherheit hinsichtlich der Funktionsweise elektrischer Geräte bei Abwesenheit.
